**Europäisches Patentamt**

**European Patent Office**

**Office européen des brevets**

(19)

(11) Veröffentlichungsnummer : **0 100 500**
**B1**

(12) **EUROPÄISCHE PATENTSCHRIFT**

(45) Veröffentlichungstag der Patentschrift :
07.05.86

(21) Anmeldenummer : 83107241.8

(22) Anmeldetag : 23.07.83

(51) Int. Cl.⁴ : **C 08 G 65/46**

(54) **Verfahren zur Entfernung des Katalysators aus Polyphenylenethern.**

(30) Priorität : 31.07.82 DE 3228662

(43) Veröffentlichungstag der Anmeldung :
15.02.84 Patentblatt 84/07

(45) Bekanntmachung des Hinweises auf die Patenterteilung : 07.05.86 Patentblatt 86/19

(84) Benannte Vertragsstaaten :
BE DE FR GB NL

(56) Entgegenhaltungen :
FR-A- 1 572 847
US-A- 4 150 218
ENCYCLOPEDIA OF POLYMER SCIENCE AND TECHNOLOGY, Band 7, 1967, Seiten 692-741
ENCYCLOPEDIA OF POLYMER SCIENCE AND TECHNOLOGY, Band 1, 1964, Seiten 197-226
Ullmanns Encyklopädie der technischen Chemie, 4.Aufl. Band 13, 1977, Seite 281

(73) Patentinhaber : **BASF Aktiengesellschaft**
**Carl-Bosch-Strasse 38**
**D-6700 Ludwigshafen (DE)**

(72) Erfinder : **Hambrecht, Juergen, Dr.**
**Werderstrasse 30**
**D-6900 Heidelberg (DE)**
Erfinder : **Reffert, Rudi Wilhelm**
**Berliner Strasse 18**
**D-6711 Beindersheim (DE)**
Erfinder : **Muench, Volker, Dr.**
**Luitpoldstrasse 114**
**D-6700 Ludwigshafen (DE)**
Erfinder : **Echte, Adolf, Dr.**
**Leuschnerstrasse 42**
**D-6700 Ludwigshafen (DE)**
Erfinder : **Swoboda, Johann, Dr.**
**Neuwiesenstrasse 28**
**D-6700 Ludwigshafen (DE)**

## Beschreibung

Die Erfindung betrifft ein Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 10 und 50 °C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators.

Polyphenylenether und Verfahren zu ihrer Herstellung sind allgemein bekannt und vielfach beschrieben, wie beispielsweise in den US-Patentschriften 3 306 874, 3 306 875, 3 639 656, 3 642 699 und 3 661 848, deren Offenbarungsgehalt in die vorliegende Anmeldung aufgenommen wird.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren, wie es z. B. in der DE-OS 2 105 372 im Gegenstromextraktionsverfahren vorgenommen wird. Verwendet werden auch Polyaminocarbonsäuren (s. DE-OS 2 364 319) oder andere Chelatisierungsmittel wie Nitrilotriessigsäure und ihre Natriumsalze oder Ethylendiaminotetraessigsäure und ihre Natriumsalze (s. DE-OS 2 532 477), letztere auch in Kombination mit quartären Ammoniumsalzen (s. US-PS 4 026 870). Beschrieben wird auch die Katalysatorabtrennung mit Hilfe komplexbildender Mittel aus der Gruppe des Bisguanids (s. DE-OS 2 460 325). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. Insbesondere die Oxidationsempfindlichkeit und die Eigenfarbe werden betroffen. Alle bisherigen Maßnahmen zur Entfernung von Katalysatorresten haben den Nachteil, daß zu einer vollständigen Entfernung (Restmenge des Metallions 10 ppm) mehrfache Extraktionsschritte bei z. T. komplizierten Trennverfahren angewendet werden müssen. Häufig wird dabei der Charakter des Polyphenylenethers verändert.

Der Erfindung lag deshalb die Aufgabe zugrunde, ein einfaches und hochwirksames Verfahren zur Abtrennung des Katalysatorreste bei der Selbstkondensation einwertiger Phenole in Gegenwart von Sauerstoff zu entwickeln.

Diese Aufgabe wird erfindungsgemäß dadurch gelöst, daß die Metallkomponente des Katalysators nach der Polymerisation durch Zugabe einer polymeren Polycarbonsäure, die im wesentlichen aus ungesättigten mono- oder difunktionellen Carbonsäuren und/oder deren Anhydriden aufgebaut ist und einen K-Wert von 10 bis 50, gemessen 1%ig in Dimethylformamid, aufweist, abgetrennt wird.

Nach bevorzugten Verfahrensweisen wird als polymere Polycarbonsäure Homo- oder Copolymerisat bestehend aus

a) 50 bis 100 Gew.% mindestens einer ungesättigten monofunktionellen Säure mit 3 bis 10 C-Atomen und/oder einer difunktionellen Säure bzw. deren Anhydrid mit 4 bis 6 C-Atomen und

b) 0 bis 50 Gew.% mindestens eines, mit a) copolymerisierbaren Monomeren ohne Säurefunktion eingesetzt, wobei insbesondere die polymere Polycarbonsäure in Form der freien Säure oder in Form der Polysalze mit Alkali- und/oder Erdalkalimetallen eingesetzt wird, die polymere Polycarbonsäure (Meth)acrylsäure und/oder Maleinsäure oder deren Anhydrid als Bausteine enthält, als polymere Polycarbonsäure eine Polyacrylsäure eingesetzt wird, als polymere Polycarbonsäure eine Polymaleinsäure eingesetzt wird, als polymere Polycarbonsäure ein Copolymerisat aus 50 bis 95 Gew.-Teilen Acrylsäure und 5 bis 50 Gew.-Teilen Maleinsäureanhydrid eingesetzt wird.

Bevorzugt ist auch die Verfahrensweise, bei der als polymere Polycarbonsäure ein Copolymerisat, bestehend aus 50 bis 95 Teilen Acrylsäure, 0 bis 48 Teilen Maleinsäureanhydrid und 2 bis 20 Teilen eines copolymerisierbaren Monomeren ohen Säurefunktion eingesetzt wird.

Die polymeren Polycarbonsäuren und deren Harze können in Form von 1 bis 20 %igen wäßrigen Lösungen eingesetzt werden.

Bevorzugt werden die polymeren Polycarbonsäuren in einer Menge eingesetzt, daß mindestens ein Mol Carbonsäuregruppe pro Mol Metallion vorhanden ist.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemäßen Polymeren weisen Molekulargewichte von 10 000 bis 90 000, bevorzugt 20 000 bis 30 000, bestimmt nach der in « Macromolecular Synthesis » 1 (1978), Seite 83 angegebenen Methode, auf. Hochmolekulare Polyphenylenether, auch Poly(phenylenoxide) genannt, sind an sich aus der Literatur seit längerem bekannt (vgl. z. B. US-PS 3,661,848 ; US-PS 3,219,625 oder US-PS 3,378,505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind die üblichen Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 10 bis 50 °C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3,306,874 und 3,306,875 beschrieben ist. Nach dem bevorzugt erfindungsgemäßen Verfahren wird der Katalysator aus Kupfersalz, vorzugsweise Kupfer-I-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z. B. n-Dibutylamin, Diethylamin, Picolin, Chinolin, Pyridinbasen, Triisopropylamin, Dimethylisopropanolamin, Triethanolamin, Triisopropanolamin, oder Diisopropanolamin mit einem Kupfersalz wie Kupfer-I-Bromid, Kupfer-I-Chlorid, Kupfer-I-Iodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1 : 1 bis 20 : 1, d. h., maximal bis zu einem Überschuß des 20-fachen am Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3,544,515).

Beim anmeldungsgemäßen Verfahren wird die Polykondensationsreaktion bei Temperaturen zwischen 10 und 50, vorzugsweise 18 und 22 °C, durchgeführt. Hierzu wird der Sauerstoff in die 10 bis 50 °C warme Lösung des Monomeren in Gegenwart des erfindungsgemäßen Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert. Wenn die Polykondensation die gewünschte Ausbeute und das Polymere das gewünschte Molekulargewicht erreicht hat, enthält die Reaktionslösung 1 bis 30 Gew.% Polyphenylenether, 0,005 bis 1,5 Gew.% Metallionen und etwa 0,1 bis 6,0 Gew.% Amin sowie gegebenenfalls geringe Mengen anderer Materialien. Diese Reaktionslösungen werden erfindungsgemäß mit den komplex- und salzbildenden polymeren Polycarbonsäuren oder deren Salze zur Abtrennung des im Polymeren enthaltenen Metallkatalysators behandelt. Die Art und Weise der Zugabe der polymeren Polycarbonsäuren ist dabei unkritisch. So können die polymeren Polycarbonsäuren in Substanz ebenso wie in wäßriger Lösung und in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Zur Vereinfachung der Ausführungsform ist es vorteilhaft, wäßrige Lösungen von nicht- oder teilneutralisierten polymeren Polycarbonsäuren einzusetzen. Die Separierung der Metallkomponente kann dabei in geeigneten Verfahrensvorrichtungen, wie z. B. in Filterpressen, in Dekantationstanks, Schälzentrifugen und ähnlichem vorgenommen werden.

Die Kontaktzeit des komplex- und salzbildenden Agens mit der katalysatorhaltigen Polyphenylenether-Phase kann innerhalb weiter Grenzen variieren. Bevorzugt werden Reaktionszeiten von 1 Minute bis 5 Stunden. Häufig genügen Reaktionszeiten von 5 bis 60 Minuten. Die bevorzugte Reaktionstemperatur liegt zwischen 20 °C und 90 °C, es sind jedoch auch Temperaturbereiche darunter und darüber anwendbar.

Bevorzugt werden als polymere Polycarbonsäuren Polymere eingesetzt, die im wesentlichen aus ungesättigten mono- und/oder difunktionellen Carbonsäuren und/oder deren Anhydride aufgebaut sind. Besonders bevorzugt sind polymere Polycarbonsäuren, die ein Homo- oder Copolymerisat aus

a) 50 bis 100 Gew.% mindestens einer ungesättigten monofunktionellen Säure mit 3 bis 10 C-Atomen und/oder einer difunktionellen Säure bzw. deren Anhydrid mit 4 bis 6 C-Atomen und

b) 0 bis 50 Gew.% mindestens eines mit a) copolymerisierbaren Monomeren ohne Säurefunktion darstellen. Typische ungesättigte monofunktionelle Säuren mit 3 bis 10 C-Atomen sind Acrylsäure, Methacrylsäure, Crotonsäure, Halbester der Maleinsäure mit $C_1$- bis $C_{10}$-Alkanolen, Vinylmilchsäure, Vinylsulfon und Vinylphosphonsäure. Besonders bevorzugt sind Acrylsäure und Methacrylsäure. Typische Vertreter des ungesättigten difunktionellen Säuren und Säureanhydride mit 4 bis 6 C-Atomen sind Maleinsäure, Maleinsäureanhydrid, Fumarsäure und Itaconsäure. Besonders bevorzugt ist der Einsatz von Maleinsäureanhydrid. Die Monomeren der Gruppe a) können für sich allein oder im Gemisch miteinander eingesetzt werden. Beispiele für Mischungen sind Acrylsäure und Methacrylsäure, Acrylsäure und Maleinsäure und insbesondere Acrylsäure und Maleinsäureanhydrid. Die Monomeren der Gruppe a) sind zu 50 bis 100 Gew.%, vorzugsweise zu 85 bis 98 Gew.%, in den polymeren Carbonsäuren enthalten.

Als copolymerisierbare Monomeren der Gruppe b) werden alle mit den Monomeren der Gruppe a) copolymerisierbaren Monomeren eingesetzt. Beispiele sind Styrol, $\alpha$-Methylstyrol, Ester der Acrylsäure oder Methacrylsäure mit ein- oder mehrwertigen Alkoholen, vorzugsweise mit einwertigen $C_1$- bis $C_{10}$-Alkanolen, Diester der Maleinsäure mit $C_1$- bis $C_{10}$-Alkoholen, -Olefine, wie Diisobuten, Dodecen, Octadecen, sodann Allylalkohol, Vinylacetat, Vinylalkylether, Acrylamid oder Vinylpyrrolidon. Besonders bevorzugte Monomere der Gruppe b) sind Vinylacetat, Methacrylat, n-Butylacrylat, 2-Ethylhexylacrylat, Hydroxypropylacrylat, Styrol, N-Vinylpyrrolidon und Vinyl-iso-butylether.

Monomere der Komponente b) sind in Mengen von 0 bis 50 Gew.%, vorzugsweise 2 bis 15 Gew.%, im Polymerisat enthalten.

Beispiele für besonders geeignete polymere Polycarbonsäuren sind Polyacrylsäure, Polymaleinsäure, Copolymere aus Acrylsäure und Maleinsäure wobei 5 bis 50 Gew.%, vorzugsweise 10 bis 30 Gew.% Maleinsäurestrukturelemente enthalten sind sowie Terpolymerisate aus 50 bis 95 Gew.%, vorzugsweise 60 bis 90 Gew.% Maleinsäureanhydrid und 2 bis 20 Gew.%, vorzugsweise 2 bis 15 Gew.% Styrol, Methacrylat oder N-Vinylpyrrolidon.

Die erfindungsgemäß einzusetzenden polymeren Säuren besitzen K-Werte zwischen 10 und 50, vorzugsweise zwischen 15 und 40, bestimmt nach DIN 53 726 in 1 %igen Lösungen in Dimethylformamid und können nach den bekannten Verfahren gemäß DE-PS 540 101, US-PS 3,755,264 oder US-PS 3,837,481, bevorzugt aber nach DE-OS 3 140 383 hergestellt werden, so daß sich eine nähere Beschreibung hier erübrigt.

Die komplex- und salzbildenden polymeren Polycarbonsäuren werden in solchen Mengen eingesetzt, daß mindestens 1 Mol Carbonsäuregruppe auf 1 Mol des zu entfernenden Metallions entfällt. Im allgemeinen werden je Äquivalent Schwermetallion 1,2 bis 100 Äquivalente Carbonsäuregruppen eingesetzt. Besonders bevorzugt werden 2 bis 50 Äquivalente Carbonsäuregruppen verwendet.

Die Abtrennung der Metallkatalysatoren bis zur vollständigen Entfernung aus dem Polyphenylenether-Polymeren kann durch mehrfache Zugabe der erfindungsgemäßen polymeren Polycarbonsäuren und anschließende Separierung der resultierenden Metallkomplexe und Metallsalze gemäß der bereits beschriebenen Verfahren erfolgen. Bevorzugt wird jedoch eine Ausführungsform der Erfindung wonach die gesamte Katalysatormenge in einem Schritt aus dem Polymeren entfernt wird.

Nach der Entfernung der metallischen Komponente als Komplex und/oder Salz kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kristisch. So kann z. B. der Polyphenylenether durch Ausfällen aus einer Reaktionslösung mittels einem Antilösungsmittel, wie beispielsweise einem Überschuß von einem Alkohol, d. h. Methanol, isoliert werden. Das filtrierte Produkt kann in Alkohol aufgeschlämmt und — falls gewünscht — mit einem Entfärbungsmittel gerührt werden und dann wird der Polyphenylenether abfiltriert und nach herkömmlichen Verfahren in Filme, Fasern, ausgeformte Gegenstände oder dgl. umgewandelt. Andere Alkohole wie Isopropanol, Propanol oder Ethanol sind in gleicher Weise verwendbar.

Die Aminkomponente des Katalysators kann durch Destillation oder nach anderen herkömmlichen Verfahren zurückgewonnen werden.

Wie bereits erwähnt, ist ein bevorzugter Aspekt des vorliegenden Verfahrens die Herstellung von Polyphenylenetherlösungen mit niedrigem Metallgehalt, aus denen die polymeren Stoffe nach sog. Totalisolationsverfahren, z. B. durch Sprühtrocknung, Dampfausfällung und Heißwasserzerkrümelung, gewonnen werden können. Dies erleichtert die wirtschaftliche Anwendung solcher Verfahren, die hinsichtlich der erforderlichen Energie, der Lösungsmittelverluste und dgl. wirtschaftlicher sind als die bekannten Ausfällungsverfahren.

Die mit der Erfindung erzielten Vorteile bestehen insbesondere darin, daß mit Hilfe der polymeren Polycarbonsäure die Metallkatalysator-Reste aus den Polyphenylenethern nahezu vollständig entfernt werden können. Die resultierenden Polyphenylenether zeichnen sich bei Rest-Katalysatormetall-Gehalten von < 10 ppm durch eine außerordentliche Farb- und Oxidationsstabilität bei der Verarbeitung im Temperaturbereich über 250 °C aus. Die Abtrennung der Metallkatalysatoren über 250 °C aus. Die Abtrennung der Metallkatalysatoren nach dem erfindungsgemäßen Verfahren ist einfach und erfolgt zumeist in einem Schritt. Dabei können niedrig- und relativ hochkonzentrierte Polyphenylenoxid-Reaktionslösungen (bis zu 25 Gew.%) ohne Probleme umgesetzt werden.

Die folgenden Beispiele dienen dazu, die Erfindung zu illustrieren. Die angegebenen Teile sind Gewichtsteile, es sei denn, es ist anders angegeben.

Die Intrinsikviskosität wird durch Messung an 0,5 %igen Lösungen in Chloroform bei 30 °C bestimmt.

Beispiel 1

Herstellung von Poly-(2,6-dimethyl-1,4-phenylen)-ether

Eine Vorlage von 1,3 g Cu-I-Bromid und 20 g 1,4-Dimethylpentylamin und 2 g 2,6-Dimethylphenol (= DMP) wurde bei 20 °C 5 Minuten unter Einleiten von Sauerstoff gerührt, und dann wurde im Verlauf von 30 Minuten in eine Lösung von 204 g DMP in 1 400 Toluol eindosiert. Anschließend wurde noch 1 Stunde bei 20 °C gerührt. Die Reaktion wird in Gegenwart von 30 Liter Sauerstoff pro Stunde durchgeführt.

Reinigung der Reaktionslösung

Nach Beendigung der Reaktion wurde die Polymerlösung mit 20 cm³ einer 10 %igen wäßrigen

0 100 500

Lösung eines Copolymerisats bestehend aus 72 Teilen Acrylsäure und 28 Teilen Maleinsäureanhydrid, einem K-Wert von 30, gemessen in 1 %igen Lösungen in Dimethylformamid entsprechend DIN 53 726, versetzt und während 10 Minuten heftig bei 60 °C gerührt. Anschließend wurden die organische und die wäßrige Phase nach einer vollständigen Phasentrennung getrennt und das Polyphenylenoxid aus der organischen Phase durch Zugabe von Methanol ausgefällt. Nach dem Trocknen wies das feste Polyphenylenoxid die in Tabelle 1 aufgeführten Eigenschaften auf.

Beispiel 2

Herstellung des Poly-(2,6-dimethyl-1,4-phenylen)-ethers

Eine Lösung von 1,2 g Cu-I-chlorid, 1,9 g Natriumbromid und 0,3 g Methyltrioctylammoniumchlorid in 15 cm³ Methanol wurden zu 1 100 cm³ Ethylbenzol hinzugegeben und bei 40 °C gerührt. Anschließend gab man 14 g Di-n-butylamin und eine Lösung von 275 g 2,6-Dimethylphenol in 400 cm³ Ethylbenzol hinzu und begaste die Reaktionslösung mit 0,1 cm³ Sauerstoff pro Stunde während 90 Minuten. Danach wurde die Sauerstoffzufuhr abgedreht und das Rekationsgefäß mit Stickstoff gespült.

Reinigung der Reaktionslösung

Nach Beendigung der Reaktion wurde die Polymerlösung mit 20 cm³ einer 5 %igen wäßrigen Lösung einer Polyacrylsäure, K-Wert 20, gemessen 1 %ig in Dimethylformamid, bei 60 °C während 10' heftig gerührt. Nach der Phasentrennung wurde das Polymerisat aus der organischen Phase durch Zugabe von Methanol ausgefällt, gewaschen und getrocknet. Die Eigenschaften des Polyphenylenethers sind in Tabelle 1 aufgeführt.

Beispiel 3

Die Herstellung des Poly-(2,6-dimethyl-1,4-phenylen)-ethers erfolgte wie in Beispiel 1 beschrieben. Die Reinigung der Polymerlösung wurde ebenfalls wie in Beispiel 1 durchgeführt, mit dem Unterschied, daß 50 cm³ einer 2 %igen wäßrigen Lösung einer Polymaleinsäure mit K-Wert 11, gemessen an 1 %igen Lösungen in DMF, eingesetzt wurden. Eigenschaften des Polymeren siehe Tabelle 1.

Beispiel 4

Die Herstellung des Poly-(2,6-dimethyl-1,4-phenylen)-ethers und die Katalysatorabtrennung erfolgte wie in Beispiel 1 beschrieben, mit dem Unterschied, daß die Metallkomponente mit 40 cm³ einer 5 %igen wäßrigen Lösung des Natriumsalzes einer Polyacrylsäure mit K-Wert 24 abgetrennt wurde. Eigenschaften des Polymeren siehe Tabelle 1.

Beispiel 5

Herstellung des Poly-(2,6-dimethyl-1,4-phenylen)-ethers und Katalysatorabtrennung erfolgten wie in Beispiel 2 beschrieben. Es wurden jedoch 100 cm³ einer 2 %igen wäßrigen Lösung eines Copolymerisats, bestehend aus 80 Teilen Acrylsäure, 15 Teilen Maleinsäure und 5 Teilen Acrylsäuremethylester mit einem K-Wert von 19, gemessen 1 %ig in Dimethylformamid, zur Katalysatorabtrennung eingesetzt. Eigenschaften des Polymeren siehe Tabelle 1.

Vergleichsbeispiel A (nicht erfindungsgemäß)

Die Herstellung des Polyphenylenoxids erfolgte wie in Beispiel 1 beschrieben. Zur Reinigung der Polymerlösung wurden 4,0 g Ethylendiamintetraessigsäure (vgl. Beispiel 1, DE-OS 2 364 319) hinzugegeben und die Polymerlösung eine weitere Stunde bei 50 °C gerührt. Die Polymerlösung wurde zentrifugiert und die organische Phase abgetrennt. Das Polymere wurde durch Zugabe von Methanol ausgefällt. Nach dem Trocknen ergaben sich für das Polyphenylenoxid die in Tabelle 1 angegebenen Zahlen.

Vergleichsbeispiel B (nicht erfindungsgemäß)

Die Herstellung des Poly-(2,6-dimethyl-1,4-phenylen)-ethers erfolgte wie in Beispiel 2 beschrieben. Die Reinigung der Polymerlösung von verbliebenem Metallkatalysator wurde mit Di-o-tolyl-bis-guanid vorgenommen. Hierzu werden 4,0 g Di-o-tolyl-bisguanid zu der Reaktionsmischung hinzugegeben (vgl. Beispiel 1, DE-OS 2 460 325) und 30 Minuten bei 40 °C gerührt. Anschließend wurde das Polymere unter Ansäuern und Abdekantieren der organischen Phase mit Methanol ausgefällt. Das resultierende Polyphenylenoxid hatte die in Tabelle 1 angegebenen Eigenschaften.

5

Tabelle 1

| Beispiel | Grenzviskosität dk/g | Kupfer-Gehalt ppm |
|---|---|---|
| 1 | 0,8 | 7 |
| 2 | 0,6 | 6 |
| 3 | 0,8 | 9 |
| 4 | 0,8 | 11 |
| 5 | 0,6 | 5 |
| Vergleichs- beispiel (nicht erfindungsgemäß) | | |
| A | 0,7 | 16 |
| B | 0,6 | 21 |

**Patentansprüche**

1. Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 10 und 50 °C in Anwesenheit eines Katalysatorkomplexes aus einem Kupfersalz und einem organischen Amin in Gegenwart eines Lösungsmittels im Bereich von 1 : 1 bis 20 : 1 Gewichtsteilen, bezogen auf das monomere Phenol, und gegebenenfalls eines Aktivators, dadurch gekennzeichnet, daß die Metallkomponente des Katalysators nach der Polymerisation durch Zugabe einer polymeren Polycarbonsäure, die im wesentlichen aus ungesättigten mono- oder difunktionellen Carbonsäuren und/oder deren Anhydriden aufgebaut ist und einen K-Wert von 10 bis 50, gemessen 1 %ig in Dimethylformamid, aufweist, abgetrennt wird.

2. Verfahren gemäß Anspruch 1, dadurch gekennzeichnet, daß als polymere Polycarbonsäuren Homo- oder Copolymerisate, bestehend aus
a) 50 bis 100 Gew.% mindestens einer ungesättigten monofunktionellen Säure mit 3 bis 10 C-Atomen und/oder einer difunktionellen Säure bzw. deren Anhydrid mit 4 bis 6 C-Atomen und
b) 0 bis 50 Gew.% mindestens eines, mit a) copolymerisierbaren Monomeren ohne Säurefunktion eingesetzt werden.

3. Verfahren gemäß Anspruch 1 und 2, dadurch gekennzeichnet, daß die polymere Polycarbonsäure in Form der freien Säure oder in Form der Polysalze mit Alkali- und/oder Erdalkalimetallen eingesetzt wird.

4. Verfahren gemäß Anspruch 1 und 2, dadurch gekennzeichnet, daß die polymere Polycarbonsäure (Meth)acrylsäure und/oder Maleinsäure oder deren Anhydrid als Bausteine enthält.

5. Verfahren gemäß Anspruch 1, 2 und 4, dadurch gekennzeichnet, daß als polymere Polycarbonsäure eine Polyacrylsäure eingesetzt wird.

6. Verfahren gemäß Anspruch 1, 2 und 4, dadurch gekennzeichnet, daß als polymere Polycarbonsäure eine Polymaleinsäure eingesetzt wird.

7. Verfahren gemäß Anspruch 1, 2 und 4, dadurch gekennzeichnet, daß als polymere Polycarbonsäure ein Copolymerisat aus 50 bis 95 Gew.-Teilen Acrylsäure und 5 bis 50 Gew.-Teilen Maleinsäureanhydrid eingesetzt wird.

8. Verfahren gemäß Anspruch 1, 2 und 4, dadurch gekennzeichnet, daß als polymere Polycarbonsäure ein Copolymerisat bestehend aus 50 bis 95 Gew.-Teilen Acrylsäure, 0 bis 48 Gew.-Teilen Maleinsäureanhydrid und 2 bis 20 Gew.-Teilen eines copolymerisierbaren Monomeren ohne Säurefunktion eingesetzt wird.

9. Verfahren gemäß der vorausgegangenen Ansprüche, dadurch gekennzeichnet, daß die polymeren Polycarbonsäuren und deren Harze in Form von 1 bis 20 %igen wäßrigen Lösungen eingesetzt werden.

10. Verfahren nach einem der vorhergehenden Ansprüche, dadurch gekennzeichnet, daß die polymere Polycarbonsäure in einer Menge eingesetzt wird, daß mindestens ein Mol Carbonsäuregruppe pro Mol Metallion vorhanden ist.

**Claims**

1. A process for the preparation of a high molecular weight polyphenylene ether from a monohydric phenol, which is alkyl-substituted at the two ortho-positions but not at the para-position and may or may not be alkyl-substituted at the meta-position, by an oxidative coupling reaction with oxygen at from 10 to 50 °C in the presence of a catalyst complex obtained from a copper salt and an organic amine and in the presence of from 1 to 20 parts by weight of a solvent per part by weight of the monomeric phenol, and in the presence or absence of an activator, wherein the metal component of the catalyst is separated off, after the polymerization, by adding a polymeric polycarboxylic acid which is essentially composed of unsaturated monofunctional or difunctional carboxylic acids and/or their anhydrides, and has a K value of from 10 to 50, measured on a 1 % strength solution in dimethylformamide.

2. A process as claimed in claim 1, wherein the polymeric polycarboxylic acid used is a homopolymer or copolymer comprising

a) from 50 to 100 % by weight of one or more unsaturated monofunctional acids of 3 to 10 carbon atoms and/or one or more difunctional acids or their anhydrides of 4 to 6 carbon atoms and

b) from 0 to 50 % by weight of one or more monomers which do not possess an acid function and can be copolymerized with a).

3. A process as claimed in claims 1 and 2, wherein the polymeric polycarboxylic acid is employed in the form of the free acid or in the form of polysalts with alkali metals and/or alkaline earth metals.

4. A process as claimed in claims 1 and 2, wherein the polymeric polycarboxylic acid contains, as building blocks, acrylic acid or methacrylic acid and/or maleic acid or its anhydride.

5. A process as claimed in claims 1, 2 and 4, wherein the polymeric polycarboxylic acid used is a polyacrylic acid.

6. A process as claimed in claims 1, 2 and 4, wherein the polymeric polycarboxylic acid used is a polymaleic acid.

7. A process as claimed in claims 1, 2 and 4, wherein the polymeric polycarboxylic acid used is a copolymer comprising from 50 to 95 parts by weitht of acrylic acid and from 5 to 50 parts by weight of maleic anhydride.

8. A process as claimed in claims 1, 2 and 4, wherein the polymeric polycarboxylic acid used is a copolymer comprising from 50 to 95 parts by weight of acrylic acid, from 0 to 48 parts by weight of maleic anhydride and from 2 to 20 parts by weight of a copolymerizable monomer which does not possess an acid function.

9. A process as claimed in any of the preceding claims, wherein the polymeric polycarboxylic acid or its resin is employed in the form of a 1 to 20 % strength aqueous solution.

10. A process as claimed in any of the preceding claims, wherein the polymeric polycarboxylic acid is employed in such an amount that at least one mole of carboxylic acid groups is present per mole of metal ions.


## Revendications

1. Procédé de préparation de poly(éthers de phénylène) d'un poids moléculaire élevé à partir de phénols monovalents, qui portent des substituants alkyle dans les deux positions ortho et éventuellement en position méta, mais pas en position para, par une réaction de copulation oxydante avec l'oxygène à des températures comprises entre 10 et 50 °C, en présence d'un complexe catalytique constitué d'un sel de cuivre et d'une amine, en présence d'un solvant en une proportion dans la gamme de 1 : 1 à 20 : 1 par rapport au phénol monomère et éventuellement d'un activateur, caractérisé en ce que, après la polymérisation, le composant métal du catalyseur est séparé par l'addition d'un acide polycarboxylique polymère, composé essentiellement d'acides carboxyliques mono- ou difonctionnels insaturés et(ou) d'anhydrides de tels acides et possédant une valeur K, mesurée en solution à 1 % dans le diméthyl-formamide, comprise entre 10 et 50.

2. Procédé suivant la revendication 1, caractérisé en ce que les acides polycarboxyliques polymères sont choisis parmi les homo- et copolymères composés de

a) 50 à 100 % en poids d'au moins un acide non saturé monofonctionnel en $C_3$ à $C_{10}$ et(ou) un acide difonctionnel en $C_4$ à $C_6$ ou un anhydride d'un tel acide et

b) 0 à 50 % en poids d'au moins un monomère sans fonction acide, copolymérisable avec a).

3. Procédé suivant la revendication 1 ou 2, caractérisé en ce que l'acide polycarboxylique polymère est mis en œuvre sous forme d'acide libre ou sous forme de ses polysels de métaux alcalins et(ou) alcalinoterreux.

4. Procédé suivant la revendication 1 ou 2, caractérisé en ce que l'acide polycarboxylique polymère comme éléments constitutifs de l'acide (méth)acrylique et(ou) de l'acide maléique ou son anhydride.

5. Procédé suivant la revendication 1, 2 ou 4, caractérisé en ce que l'acide polycarboxylique polymère est un acide polyacrylique.

6. Procédé suivant la revendication 1, 2 ou 4, caractérisé en ce que l'acide polycarboxylique polymère est un acide polymaléique.

7. Procédé suivant la revendication 1, 2 ou 4, caractérisé en ce que l'acide polycarboxylique polymère est un copolymère de 50 à 95 parties en poids d'acide acrylique et de 5 à 50 parties en poids d'anhydride maléique.

**0 100 500**

8. Procédé suivant la revendication 1, 2 ou 4, caractérisé en ce que l'acide polycarboxylique polymère est un copolymère de 50 à 95 parties en poids d'acide acrylique, de 0 à 48 parties en poids d'anhydride maléique et de 2 à 20 parties en poids d'un monomère copolymérisable sans fonction acide.

9. Procédé suivant les revendications précédentes, caractérisé en ce que les acides polycarboxyliques polymères et leurs résines sont mis en œuvre sous forme de solutions aqueuses d'une concentration de 1 à 20 %.

10. Procédé suivant l'une des revendications précédentes, caractérisé en ce que l'acide polycarboxylique polymère est mis en œuvre en une proportion suffisante pour donner au moins 1 mole de groupe acide carboxylique par mole d'ion de métal.